Europäisches Patentamt

European Patent Office

Office européen des brevets

(11) Veröffentlichungsnummer: **0 299 175 B1**

(12) **EUROPÄISCHE PATENTSCHRIFT**

(45) Veröffentlichungstag der Patentschrift: **04.03.92**

(21) Anmeldenummer: **88108299.4**

(22) Anmeldetag: **25.05.88**

(51) Int. Cl.5: **C01C 3/02**

(54) **Verfahren zur Herstellung von Cyanwasserstoff.**

(30) Priorität: **16.07.87 DE 3723535**

(43) Veröffentlichungstag der Anmeldung:
**18.01.89 Patentblatt 89/03**

(45) Bekanntmachung des Hinweises auf die
Patenterteilung:
**04.03.92 Patentblatt 92/10**

(84) Benannte Vertragsstaaten:
**AT BE CH DE ES FR GB IT LI NL**

(56) Entgegenhaltungen:
**EP-A- 0 088 988**
**DE-A- 1 933 240**
**DE-B- 1 013 636**
**DE-C- 882 985**

(73) Patentinhaber: **Degussa Aktiengesellschaft**
**Weissfrauenstrasse 9**
**W-6000 Frankturt am Main 1(DE)**

(72) Erfinder: **Witzel, Michael, Dr.**
**Danneckerstrasse 6**
**W-6000 Frankturt 70(DE)**
Erfinder: **Kleinschmit, Peter, Dr.**
**Wildaustrasse 19**
**W-6450 Hanau 9(DE)**
Erfinder: **Pfeifer, Wolf-Dieter, Dr.**
**Stettiner Strasse 4**
**W-5040 Brühl(DE)**
Erfinder: **Voigt, Carl, Dr.**
**1181 Rosethorne Road**
**Oakville, Ont.L6M 1H5(CA)**
Erfinder: **Albers, Peter, Dr.**
**August-Fecher-Strasse 23**
**W-6450 Hanau 7(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Herstellung von Cyanwasserstoff nach dem BMA-Verfahren (Blausäure-Methan-Ammoniak-Verfahren) mit einem günstigeren Katalysator als bisher.

Es ist bekannt, daß das bekannte BMA-Verfahren bei Temperaturen von etwa 1000 bis 1350 °C durchgeführt und hierfür das Gasausgangsgemisch von Methan und Ammoniak durch hängende Reaktionsrohre, deren innere Oberfläche mit einer Edelmetall-, bevorzugt Platin-Aluminiumschicht bedeckt ist, geführt und dabei umgesetzt wird, siehe z.B. Ullmann, Enzyklopädie der technischen Chemie, 4. Auflage, Band 9, Seite 659, (1975).

Nach der DE-PS 10 68 681 hat sich gezeigt, daß eine nichtmetallische Kontaktmasse, wie Aluminiumoxyd, zwar zu Beginn der Reaktion günstige Ausbeuten an Cyanwasserstoff ergibt, daß aber im Laufe der Reaktion ein starkes Nachlassen der Katalysatoraktivität von Aluminiumoxyd auftritt, und zwar bedingt durch die Bildung von Aluminiumnitrid.

Ein auf der Oberfläche des Aluminiumoxyds gebildeter Überzug von Edelmetall, z.B. Platin, sollte aber diesen Einfluß des Aluminiumnitrids neutralisieren.

In späteren Verfahren, z.B. dem der EP-PS 0 088 988, wurde dagegen die Bildung von Aluminiumnitrid bei der Verwendung von $\alpha$-Aluminiumoxyd positiver beurteilt, jedoch ein Zusatz von Schwefelverbindungen als unbedingt notwendig erachtet. Diese, für die Cyanwasserstoffherstellung systemfremden Verbindungen wurden gasförmig dem Ausgangsgemisch von vornherein zugegeben und mußten während der Dauer der Reaktion laufend nachdosiert werden. Der gebildete Cyanwasserstoff enthielt also eine bestimmte Menge an Schwefelverbindungen.

Trotz dieser Anstrengungen, den Leistungsabfall von $Al_2O_3$ als Katalysator bei der Blausäureherstellung zu verringern, lagen seine Betriebszeiten bei höchstens 10 Tagen; d.h. für einen kontinuierlichen Dauerbetrieb schien $Al_2O_3$ nicht geeignet zu sein.

Die DE-AS 10 13 636 lehrt ein Verfahren zur Herstellung von Blausäure nach dem BMA-Verfahren, wobei Katalysatoren verwendet werden, die neben einem oder mehreren Platinmetallen Aluminium und/oder Magnesium in metallischer Form oder als Nitrid enthalten. Der Gehalt an Al und/oder Mg kann bis zu 90 Atom-%, vorzugsweise 50 bis 80 Atom-%, betragen. Nach einer Formierungsdauer von 25 Stunden ist die volle Katalysatorwirksamkeit erreicht.

In dem BMA-Verfahren der DE-OS 19 33 240 weist der Katalysator einen Überzug aus Platin, gegebenenfalls legiert mit bis zu 20 % eines anderen Metalls, auf einem geglühten Mullit großer Oberfläche als Träger auf.

Aufgabe der Erfindung ist es, ausgehend von Aluminiumoxyd, einen vor allem im Dauerbetrieb verbesserten Katalysator bei der Blausäureherstellung nach dem BMA-Verfahren einzusetzen.

Gefunden wurde ein Verfahren zur Herstellung von Cyanwasserstoff nach den Bedingungen des sogenannten BMA-Verfahrens, durch Umsetzen von aliphatischen Kohlenwasserstoffen mit 1 bis 4 Kohlenstoffatomen mit Ammoniak in Gegenwart eines Katalysators, zu dessen Gewinnung man auf die Oberfläche von Formkörpern aus Aluminiumoxid Aluminiumionen und Ionen der Platiummetallgruppe, bevorzugt Platinionen, aus einer Katalysatorlösung aufbringt, in bekannter Weise trocknet und danach mit Wasserstoff reduziert, hierauf die so erhaltene Katalysatorvorform in den Cyanwasserstoffreaktor einbringt, den Reaktor auf Temperaturen von 1000 bis 1300 °C aufheizt, Ammoniak und den Kohlenwasserstoff in den Reaktor einführt und die Reaktion zu Cyanwasserstoff initiiert und diese Reaktion mit der sich während der Anlaufzeit in situ bildenden zusammenhängenden Katalysatorschicht weiterführt, das dadurch gekennzeichnet ist, daß man in der Katalysatorlösung ein Atomverhältnis von Platinmetall zu Aluminium von 0,001 zu 1 bis 0,1 zu 1 einstellt und unter Einsatz des für das BMA-Verfahren üblichen Gemischs aus Ammoniak und dem Kohlenwasserstoff nach einer Anlaufzeit von meistens einer halben bis einer Stunde die endgültige Katalysatorform gewinnt.

Unter aliphatischen Kohlenwasserstoffen mit 1 - 4 Kohlenstoffatomen werden Methan, Äthan, Propan, Butane verstanden. Bevorzugt ist Methan.
Als Aluminiumoxyd werden für die Vorform des Katalysators handelsübliches $\alpha$- oder $\gamma$-Aluminiumoxyd verwendet.
Als Formkörper können sowohl handelsübliche Pellets als auch grobes Granulat eingesetzt werden. Auch Pd, Ir, Rh sind als Katalysator möglich, bevorzugt ist Pt.
Für das BMA-Verfahren sind jedoch als Formkörper Rohre aus $\alpha$-Aluminiumoxyd bevorzugt, auf deren innerer Oberfläche die oben beschriebene Katalysatorlösung in an sich bekannter Weise aufgebracht wird, siehe z.B. DE-PS 919 768 oder DE-PS 30 34 957.
Die für die Katalysatorlösung vorgesehene sehr geringe Menge an Platin kann in üblicher Form, z.B. als Hexachloroplatinat oder auch als Alkalitetrachloroplatinat eingesetzt werden.
Leicht in Wasser lösliche Aluminiumsalze, wie z.B. Chlorid, Nitrat oder Sulfat, liefern die Aluminiumionen. Das Molverhältnis von Platin zu Aluminium soll in der Katalysatorlösung zwischen 0,001 zu 1 bis 0,1 zu 1, bevorzugt zwischen 0,01 bis 0,1 zu 1 liegen. Die Katalysatorlösungen, die bevorzugt wäßrig sind, enthalten Platinionen in schwacher Konzentration, d.h. in Mengen von 0,5 bis 5 Gew.-%. Gemäß den jeweiligen Molverhältnissen werden die entsprechenden Mengen an Aluminiumionen eingesetzt.

Die Beschichtung der Pellets oder Granulate erfolgt nach bekannten Methoden, z.B. durch Übergießen dieser Formkörper mit der Katalysatorlösung, die nach einer bestimmten Einwirkungszeit abgegossen wird, darauf folgt die Trocknung bei höherer Temperatur und die Reduktion im Wasserstoffstrom, siehe DE-PS 1 068 681.

Die Innenbeschichtung der Rohre wird - wie gesagt -entweder per Hand oder mechanisch nach den deutschen Patentschriften 919 768 oder 30 34 957 vorgenommen. Die getrocknete und reduzierte Vorstufe (Vorform) wird, bevorzugt in Form der innenbeschichteten Rohre, in den Reaktor des BMA-Verfahrens in üblicher Weise als hängende Rohre eingeführt. Nach Einbringung der Vorstufe des Katalysators in den BMA-Reaktor und dessen Aufheizung auf Reaktionstemperatur wird ein für das BMA-Verfahren übliches Gasgemisch aus Ammoniak und Kohlenwasserstoff in das Rohr eingeführt; nach einer Anlaufzeit, d.h. meistens nach einer halben bis einer Stunde nach Reaktionsbeginn, liegt durch in-situ-Phasenumwandlung die innere Oberfläche der Reaktionsrohre als Aluminiumnitrid vor; die Katalysator-Vorstufe ist damit in die endgültige Katalysatorform übergegangen. Diese endgültige Form ist für den Dauerbetrieb hervorragend geeignet, siehe die Beispiele.

Der technische Fortschritt des erfindungsgemäßen Verfahrens liegt in dem Dauerbetrieb eines aus Aluminiumoxyd gebildeten Katalysators auf Basis Aluminiumnitrid, ohne daß im Gasgemisch von Ammoniak und der Kohlenwasserstoffkomponente weitere Zuschlagstoffe erforderlich sind. Damit wird auch eine Verunreinigung des gebildeten Cyanwasserstoffs ausgeschlossen.

Regenerationszyklen zur Wiederherstellung der vollen Katalysatoraktivität mit reinem Wasserstoff oder Ammoniak sind - wenn überhaupt - äußerst selten notwendig. Darüber hinaus ist eine erhebliche Einsparung des Edelmetalls, bevorzugt des Platins, ein weiterer Vorzug.

Die Erfindung wird anhand der folgenden Beispiele erläutert. Zunächst wird die Imprägnierung von Pellets bzw. die Innenbeschichtung der Rohre näher beschrieben.
Die nachstehend angegebenen Ergebnisse für das BMA-Verfahren unter Verwendung des erfindungsgemäßen Katalysators wurden in einer Testapparatur, die der bekannten BMA-Apparatur nachgebildet war, durchgeführt; sie bestand aus einer Reaktionskammer mit entsprechenden Heizmöglichkeiten, Einrichtungen zur Gasdosierung sowie zur Gasanalyse, (Dechema-Monographie 33 (1959) Seiten 28 - 46).

In ein 750 mm langes Quarzrohr, das sich in einem senkrecht angebrachten Röhrenofen befand, wurden die erfindungsgemäß hergestellten Pellets aus Aluminiumoxyd derartig angebracht, daß sie sich in der beheizbaren Zone des Ofens befanden. Das Ausgangs-Gasgemisch aus Ammoniak und Methan im stöchiometrischen Verhältnis wurde am unteren Ende des Quarzrohres in dieses eingeleitet und über die Pellets geführt. Mit Hilfe einer Durchflußmengenregulierung wurde das eingestellte Mischungsverhältnis gesichert. Nach Umsetzung der Reaktionskomponenten im Bereich von 1250 -1350 °C wurden die Produktgase "Cyanwasserstoff und Wasserstoff" zunächst zur Volumenbestimmung über eine Gasuhr geleitet und anschließend durch Maßanalyse in bekannter Weise bestimmt (durch Absorption des nichtumgesetzten Ammoniaks in Schwefelsäure und des Cyanwasserstoffs in wäßriger Natronlauge). Die Drücke vor und hinter der Reaktionskammer wurden mit U-Rohr-Monometern gemessen.

Die Versuche mit hängenden, innenbeschichteten Rohren wurden in der gleichen Apparatur vorgenommen, nur wurde die Pelletsschüttung durch die genannten Rohre ersetzt.

A) Beschichtung der Pellets:

Beispielhaft wird die Beschichtungsmethode für Pellets mit einer wäßrigen Lösung, die Platin und Aluminium im Molverhältnis für Platinatom zu Aluminiumion von 0,1 zu 1 enthielt, beschrieben.
6 g $H_2PtCl_6$ x 6 $H_2O$ = 11,59 mmol Platin = 2,26 g Platin und 27,97 g $AlCl_3$ x 6 $H_2O$ = 115,9 mmol = 3,12 g
Aluminium werden in 50 ml $H_2O$ gelöst und in einem 500 ml-Einhals-Rundkolben zu 44 g (40 g + 4 g für Röntgenbeugung) feuchten Pellets gegeben. Das Lösungsmittel wird am Rotationsverdampfer unter Vakuum abgezogen und so das Salzgemenge auf die Pellets aufgebracht. Die Nachtrocknung erfolgt im Röhrenofen bei 200 °C im Stickstoffstrom. Zur Reduktion wird die Temperatur in ΔT-Schritten von 100 °C bis auf 800 °C erhöht und dabei mit 40 l/h $H_2$ reduziert. Die Katalysatorbeaufschlagung wird anschließend durch Differenzwägung ermittelt.
Anders konzentrierte Lösungen werden entsprechend hergestellt.

B) Innenbeschichtung der BMA-Rohre

Hier wurde die gleiche Apparatur wie unter A) benutzt, mit der Abänderung, daß anstelle der Pelletsbeschichtung α-$Al_2O_3$-Keramikrohre eingesetzt wurden. Die Beschichtung erfolgte mit wäßrigen Lösungen, die denen für die Pelletsbeschichtung entsprachen.

Für die Methoden A) und B) wurden wäßrige Lösungen mit Molverhältnissen Platinatom zu Aluminiumion von 0,1 zu 1 bis 0,001 zu 1 eingesetzt.

Die jeweilige Menge an Katalysator betrug 5 g (aus Platinion + Aluminiumion) bei einer Trägermasse aus Aluminiumoxyd von etwa 40 g.

Folgende Parameter wurden für alle Beispiele zu Grunde gelegt:

Oberfläche des Trägers: 1120 cm$^2$
Temperatur des Ofens: 1250 °C - 1300 °C
Durchsatz: 1 Mol CH$_4$ + 1,1 Mol NH$_3$/ h
Beschichtungsvorgang: 1

Die Laufzeit (Betriebsdauer) war in den einzelnen Beispielen verschieden.

## Beispiel 1

Eine Pelletsschüttung, die mit einer Lösung mit einem Pt/Al-Verhältnis von 0,1 : 1 beschichtet war, erbrachte nach 5 Tagen Betriebsdauer eine Ausbeute an Cyanwasserstoff von 92 %, bezogen auf eingesetztes Methan.

## Beispiel 2

Hier war die Platinmenge bei der Beschichtung der Pellets auf ein Zehntel von der in Beispiel 1 verringert worden. (Molverhältnis Pt/Al = 0,01 : 1) Nach 5 Tagen Betriebsdauer wurde auch hier eine Ausbeute von 92 % Cyanwasserstoff, bezogen auf Methan, erhalten. Mit Hilfe der Röntgenbeugung wurde in beiden Fällen die Umwandlung von Aluminiumoxyd zu Aluminiumnitrid verfolgt nach der Methode in "H. Krischner, Einführung in die Röntgenstrukturanalyse, Vieweg-Verlag Braunschweig, 1974."

Die folgenden Beispiele 3 und 4 wurden in der einer BMA-Apparatur nachgebauten Testapparatur durchgeführt.

## Beispiel 3

Die Platin-Aluminiummenge entsprach dem Molverhältnis Pt/Al = 0,01 : 1 bei der Innenbeschichtung der Rohre. Nach einer Laufzeit von 20 Tagen war der Katalysator noch unverändert aktiv. Die Ausbeute an Cyanwasserstoff betrug 90 %, bezogen auf Methan.

## Beispiel 4

Beispiel 3 wurde wiederholt, aber das Molverhältnis von Pt/Al war 0,001 : 1 bei der Innenbeschichtung der Rohre. Nach 20 Tagen betrug die Ausbeute noch 91 %, bezogen auf Methan. Wurde jedoch das Molverhältnis von Pt/Al auf 0 : 1 abgesenkt, so war eine Cyanwasserstoffsynthese nicht mehr möglich.

## Beispiel 5

In einem Betriebsversuch in einer Betriebsanlage mit einer 26-Rohrkammer wurde das Molverhältnis von Pt/Al auf 0,1 : 1 eingestellt. Noch nach einer Betriebsdauer von 150 Tagen (5 Monaten) war keine Abnahme der Aktivität in der Wirkung des erfindungsgemäßen Katalysators festzustellen. Die Ausbeute lag hier konstant bei 88 %, bezogen auf Methan.

Die analytischen Untersuchungen an den inneren Oberflächen der Rohre wurden in den Beispielen 3 - 5 nicht mit integraler Röntgenbeugungsmethode, sondern durch die für heterogene Katalyse relevante Esca-Methode vorgenommen, siehe Ullmann, Enzyklopädie der technischen Chemie, 4.Aufl. Band 5, Seite 519 ff. Dabei stellte sich vor allem im Betriebsversuch heraus, daß auf der inneren Oberfläche der Rohre eine zusammenhängende Aluminiumnitridschicht vorlag.

Gegenüber dem Stand der Technik, siehe z.B. DE-PS 1 068 681 und EP-PS 088 988, ist also eine Dauerbelastung des erfindungsgemäßen Katalysators auf Basis Aluminiumnitrid auf das 50- bis 15-fache der bisherigen Dauer möglich. Hierzu ist keinerlei Veränderung in der Zusammensetzung des Ausgangsgemisches der Reaktionsgase notwendig.

## Patentansprüche

1. Verfahren zur Herstellung von Cyanwasserstoff nach den Bedingungen des sogenannten BMA-Verfahrens durch Umsetzen von aliphatischen Kohlenwasserstoffen mit 1 bis 4 Kohlenstoffatomen mit Ammoniak in Gegenwart eines Katalysators, zu dessen Gewinnung man auf die Oberfläche von Formkörpern aus Aluminiumoxid Aluminiumionen und Ionen der Platiummetallgruppe, bevorzugt Platinionen, aus einer Katalysatorlösung aufbringt, in bekannter Weise trocknet und danach mit Wasserstoff reduziert, hierauf die so erhaltene Katalysatorvorform in den Cyanwasserstoffreaktor einbringt, den Reaktor auf Temperaturen von 1000 bis 1300 °C aufheizt, Ammoniak und den Kohlenwasserstoff in den Reaktor einführt und die Reaktion zu Cyanwasserstoff initiiert und diese Reaktion mit der sich während der Anlaufzeit in situ bildenden zusammenhängenden Katalysatorschicht weiterführt, dadurch gekennzeichnet, daß man in der Katalysatorlösung ein Atomverhältnis von Platinmetall zu Aluminium von 0,001 zu 1 bis 0,1 zu 1 einstellt und unter Einsatz des für das BMA-Verfahren üblichen Gemischs aus Ammoniak und dem Kohlenwasserstoff nach einer Anlaufzeit von meistens einer halben bis einer Stunde die endgültige Katalysatorform gewinnt.

2. Verfahren nach Anspruch 1,
dadurch gekennzeichnet,
daß man in der Katalysatorlösung ein Atomverhältnis von Platinmetall zu Aluminium von 0,001 zu 1 bis 0,01 zu 1 einstellt.

3. Verfahren nach Anspruch 1 oder 2,
dadurch gekennzeichnet,
daß man wäßrige Katalysatorlösungen mit einem Gehalt von 0,5 bis 5 Gew.-% Platinionen einsetzt.

4. Verfahren nach einem oder mehreren der Ansprüche 1 bis 3,
dadurch gekennzeichnet,
daß man den Katalysator auf Formkörper aus $\alpha$-Aluminiumoxid aufbringt.

## Claims

1. Process for the preparation of hydrogen cyanide under the conditions of the so-called BMA process by reacting aliphatic hydrocarbons having 1 to 4 carbon atoms with ammonia in the presence of a catalyst, for the production of which aluminium ions and ions from the group of platinum metals, preferably platinum ions, are applied from a catalyst solution onto the surface of shaped alumina articles are dried in a known manner and subsequently reduced using hydrogen, the catalyst precursor thus obtained is then introduced into the hydrogen cyanide reactor, the reactor is heated to temperatures from 1000 to 1300°C, ammonia and the hydrocarbon are introduced into the reactor and the reaction to form hydrogen cyanide is initiated, and this reaction is continued by means of the coherent catalyst coating which forms in situ during the start-up period, characterised in that the atomic ratio of platinum metal to aluminium in the catalyst solution is set to 0.001 : 1 to 0.1 : 1 and the ultimate catalyst form is obtained after a start up period of at least half an hour to one hour, using the mixture of ammonia and hydrocarbon customary for the BMA process.

2. Process according to Claim 1, characterised in that the platinum metal: aluminium atomic ratio in the catalyst solution is set from 0.001 : 1 to 0.01 : 1.

3. Process according to Claim 1 or 2, characterised in that aqueous catalyst solutions containing 0.5 to 5% by weight of platinum ions are employed.

4. Process according to one or more of Claims 1 to 3, characterised in that the catalyst is applied to shaped articles made of $\alpha$-alumina.

## Revendications

1. Procédé pour la préparation de l'acide cyanhydrique selon les conditions du procédé dit PMA, par mise en réaction d'hydrocarbures aliphatiques, ayant de 1 à 4 atomes de carbone, avec de l'ammoniac en présence d'un catalyseur pour l'obtention duquel on applique sur la surface de corps moulés à base d'oxyde d'aluminium, des ions aluminium et des ions de la famille du platine, de préférence des ions platine, à partir d'une solution de catalyseur, on sèche de façon connue et on réduit ensuite avec de l'hydrogène, après cela on introduit dans le réacteur d'acide cyanhydrique la forme préliminaire de catalyseur ainsi obtenue, on chauffe le réacteur à des températures de 1000 à 1300°C, on introduit de l'ammoniac et l'hydrocarbure dans le réacteur et on déclenche la réaction conduisant à l'acide cyanhydrique, et on poursuit cette réaction avec la couche continue de catalyseur qui se forme in situ pendant le temps de démarrage, procédé caractérisé en ce que l'on ajuste dans la solution de catalyseur, un rapport atomique du platine métallique à l'aluminium allant de 0,001 : 1 à 0,1 : 1, et, en utilisant le mélange d'ammoniac et de l'hydrocarbure, usuel pour le procédé PMA, on obtient, après un temps de démarrage allant généralement d'une demi-heure à 1 heure, la forme de catalyseur finale.

2. Procédé selon la revendication 1, caractérisé en ce que, dans la solution de catalyseur, on ajuste un rapport atomique du platine métallique à l'aluminium allant de 0,001 : 1 à 0,01 : 1.

3. Procédé selon la revendication 1 ou 2, caractérisé en ce que l'on utilise des solutions aqueuses de catalyseur ayant une teneur en ions platine allant de 0,5 à 5 % en poids.

4. Procédé selon l'une quelconque des revendications 1 à 3, caractérisé en ce que l'on applique le catalyseur sur des corps moulés à base d'oxyde d'aluminium $\alpha$.